# EUROPEAN PATENT SPECIFICATION

(11) **EP 3 978 738 B1**
(45) Date of publication and mention of the grant of the patent: **27.03.2024**
(21) Application number: 21198180.8
(22) Date of filing: 22.09.2021
(51) Int. Cl.: F02C 3/22, F02C 7/224, F02C 9/26, F02C 6/08

(54) **HYDROGEN FUEL VAPORISER**
WASSERSTOFFBRENNSTOFFVERDAMPFER
VAPORISATEUR DE COMBUSTIBLE À HYDROGÈNE

(30) Priority: 30.09.2020 GB 202015452; 30.09.2020 GB 202015453; 30.09.2020 GB 202015454; 27.10.2020 GB 202017014
(43) Date of publication of application: 06.04.2022
(73) Proprietor: Rolls-Royce plc, London N1 9FX (GB)
(72) Inventor: Palmer, Chloe, Derby, DE24 8BJ (GB)
(74) Representative: Rolls-Royce plc

(56) References cited:
- EP-A1- 3 620 719
- EP-A1- 3 623 602
- WO-A1-2014/105327
- US-A- 4 942 733
- US-A- 6 079 222

## Description

### CROSS-REFERENCE TO RELATED APPLICATIONS

This application claims priority from United Kingdom Patent Application Nos 20 15 452.2, 20 15 453.0, and 20 15 454.8, all filed September 30, 2020, and United Kingdom Patent Application No 20 17 014.8 filed October 27, 2020.

United States patent application US6079222A discloses a method for preparing deep-frozen liquid gas for the purpose of recovering process energy for a downstream process, with which the refrigerating capacity of the deep-frozen liquid gas can also be used in the downstream process. In the disclosure, this is achieved by the fact that the refrigerating capacity of the deep-frozen liquid gas is fed as a heat sink to at least one of the part-steps of the downstream process via at least one heat-exchange medium and, if said heat-exchange medium is not available, the deep-frozen liquid gas is regasified with an additional heat-exchange medium.

United States patent application US4942733A discloses a hot gas generator system which includes a combustor and a condenser, with the combustor connected to the condenser for condensing the product of combustion from the combustor. A hydrogen supply is connected to the condenser and then to the combustor whereby the hydrogen absorbs heat from the combustion product as it condenses and the hydrogen thereby is preheated prior to entering the combustor. An oxygen supply is connected to the combustor for mixing with the hydrogen during combustion. The combustor is part of an integrated heat exchanger/combustor whereby a minor portion of the hydrogen passing through the condenser is used in the combustor for burning purposes and a major portion of the hydrogen is passed through the combustor for superheating the hydrogen prior to delivering the hydrogen to a prime mover, such as a thruster or a turbogenerator of a space platform or the like.

European patent application EP3623602 discloses a gas turbine engine system which includes a gas turbine engine and a fuel turbine system. The gas turbine engine includes a heat exchange system configured to transfer thermal energy from a first compressed air flow and an exhaust gas flow to a fuel to produce a gaseous fuel. The fuel turbine system includes a fuel turbine fluidly coupled to the heat exchange system and a combustor of the gas turbine engine, and a fuel pump fluidly coupled to the heat exchange system and configured to be driven by the fuel turbine. The fuel turbine is configured to extract energy from expansion of the gaseous fuel to produce the gaseous fuel at a lower pressure for delivery to the combustor.

European patent application EP3620719 discloses a gas turbine combustor which reduces NOx emissions for a hydrogen containing fuel. The gas turbine combustor of the present invention includes a combustion chamber which burns a fuel and air, an air hole plate which is located on an upstream side of the combustion chamber and has air holes which are concentrically arranged plurally in line and plurally in number, and fuel nozzles which are arranged plurally in line and plurally in number, and a fuel nozzle inner wall has a fuel nozzle tapered shape which extends in an outer circumferential direction on a leading end part of the fuel nozzle.

International patent application WO2014105327 discloses a turbine engine assembly having a turbine core comprising a compressor section, a combustion section, a turbine section, and a nozzle section, which are axially aligned, wherein the combustion section comprises a generally annular case having inner and outer walls, a heat exchanger comprising multiple passages in proximity to at least one of the inner and outer walls, with the passages arranged about at least a portion of the case and in fluid communication with each other such that fluid may flow through the passages and a cryogenic fuel system having a cryogenic fuel tank with a supply line coupled to one of the passages, wherein cryogenic fuel may be supplied from the cryogenic fuel tank, through the supply line, to the passages of the heat exchanger, where the fuel in the passages may be heated by the combustion section. The heat exchanger may be a single or multistage vaporizer.

### TECHNICAL FIELD

This disclosure relates to hydrogen fuel vaporisers for hydrogen-fuelled aero gas turbine engines.

### BACKGROUND

In order to limit emissions of carbon dioxide, use of hydrogen as an alternative to hydrocarbon fuel in gas turbine engines has historically only been practical in land-based installations. Such engines are typically supplied with hydrogen derived from natural gas via concurrent steam methane reformation, which hydrogen is injected into large-volume series staged dry low NOₓ burners. This type of burner is not suitable for use in an aero engine primarily due to its size and the difficulties in maintaining stable operation during transient manoeuvres.

Experimental programmes have been conducted to develop aero engines operable to be fuelled with hydrogen, however these have typically been high-Mach afterburning turbojets or expander cycles and thus not practical for use on civil airliners operating in the Mach 0.8 to 0.85 regime.

There is therefore a need for technologies for combustion of hydrogen in aero gas turbine installations, in particular around the overall engine cycle to for example minimise fuel consumption, the fuel delivery system to for example meter fuel accurately, and the fuel injection system to for example minimise emissions.

### SUMMARY

The invention is directed towards hydrogen fuel vaporisers for vaporising cryogenically-stored hydrogen fuel prior to injection into gas turbine engines, gas turbine engines incorporating such gas turbines, and methods of operating such gas turbines.

In an aspect, there is provided a hydrogen-fuelled gas turbine engine comprising: a fuel pump configured to pump cryogenically-stored hydrogen fuel through a main fuel conduit;
a hydrogen fuel vaporiser having a fuel offtake to divert a portion of hydrogen fuel from a main fuel conduit, a burner to burn the portion of hydrogen fuel diverted from the main fuel conduit, and a heat exchanger to transfer heat produced by the burner to hydrogen fuel in the main fuel conduit, thereby vaporising it; and
a fuel injection system configured to receive vaporised hydrogen fuel and inject it into a combustor; wherein
the gas turbine engine comprises a compressor for compressing inlet air for supply to the combustor, and characterised in that the gas turbine engine comprises
a bleed air system configured to bleed compressed air from the compressor and supply it to the burner to burn with the portion of hydrogen fuel diverted from the main fuel conduit.

In an embodiment, the hydrogen fuel vaporiser further comprises a pre-mixer configured to mix air with the portion of hydrogen fuel diverted from the main fuel conduit prior to admission into the burner.

In an embodiment, the gas turbine engine further comprises a fuel recuperator between the hydrogen fuel vaporiser and the fuel injection system for heating the hydrogen fuel by exhaust from the gas turbine engine.

In an embodiment, the gas turbine engine further comprises a fuel turbine for receiving heated hydrogen fuel from the recuperator to drive a load.

In another aspect, there is provided a method of delivering cryogenically-stored hydrogen fuel to a gas turbine engine, comprising:
pumping the hydrogen fuel from a cryogenic storage system through a main fuel conduit;
diverting a portion of hydrogen fuel from the main fuel conduit;
burning the portion of hydrogen fuel diverted from the main fuel conduit in a burner;
vaporising the hydrogen fuel in the main fuel conduit by exchanging heat produced by the burner thereto in a heat exchanger;
characterised in that the method further comprises
bleeding compressed air from a compressor of the gas turbine engine and supplying the compressed air to the burner to burn with the portion of hydrogen fuel diverted from the main fuel conduit.

In an embodiment, the method further comprises pre-heating the portion of hydrogen fuel diverted from the main fuel conduit to boil it prior to the burning step, optionally wherein the pre-heating comprises boiling it with an electrical heating element, or in a boil volume.

In an embodiment, the method further comprises pre-mixing air with the portion of hydrogen fuel diverted from the main fuel conduit prior to the burning step.

In an embodiment, the method further comprises recuperating exhaust heat from the gas turbine into the hydrogen fuel after the vaporising step and before the injecting step.

### BRIEF DESCRIPTION OF THE DRAWINGS

Embodiments will now be described by way of example only with reference to the accompanying drawings, which are purely schematic and not to scale, and in which:
Figure 1 shows a hydrogen-fuelled airliner comprising hydrogen-fuelled turbofan engines;
Figure 2 is a block diagram of one of the engines of Figure 1;
Figure 3 shows a vaporiser of engine of Figure 2;
Figure 4 shows a complex cycle embodiment of the engine of Figure 2;
Figure 5 shows another complex cycle embodiment of the engine of Figure 2;
Figure 6 shows another complex cycle embodiment of the engine of Figure 2.

### DETAILED DESCRIPTION

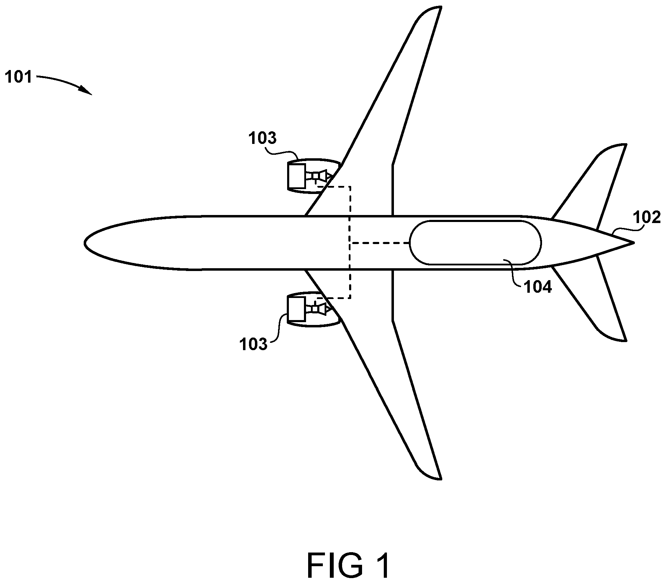

A hydrogen-fuelled airliner is illustrated in Figure 1. In this example, the airliner 101 is of substantially conventional tube-and-wing twinjet configuration with a central fuselage 102 and substantially identical underwing-mounted turbofan engines 103. In the present embodiment, the turbofan engines 103 are geared turbofan engines.

A hydrogen storage tank 104 located in the fuselage 102. In the present embodiment, the hydrogen storage tank 104 is a cryogenic hydrogen storage tank and thus stores the hydrogen fuel in a liquid state, in a specific example at 20 kelvin. In this example, the hydrogen fuel is pressurised to a pressure from around 1 bar to around 3 bar, in a specific example 2 bar.

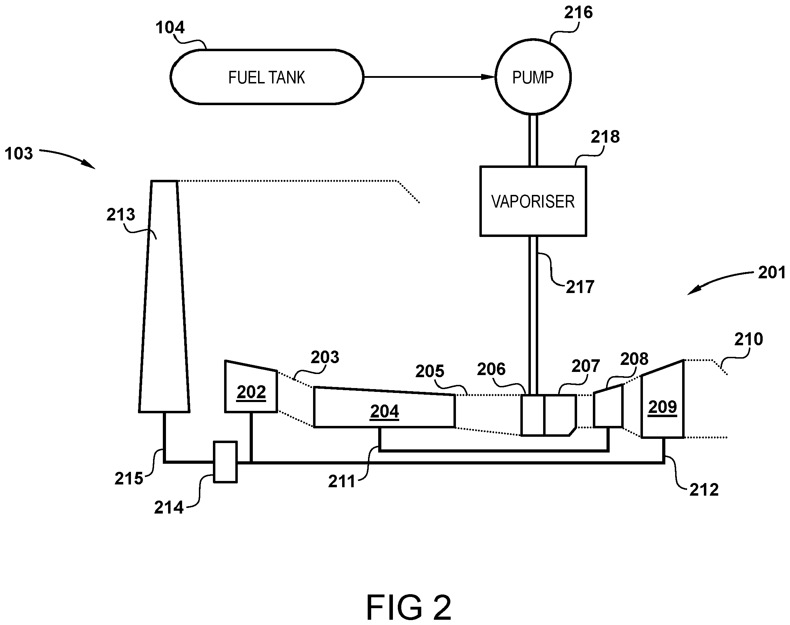

A block diagram of one of the turbofan engines 103 is shown in Figure 2.

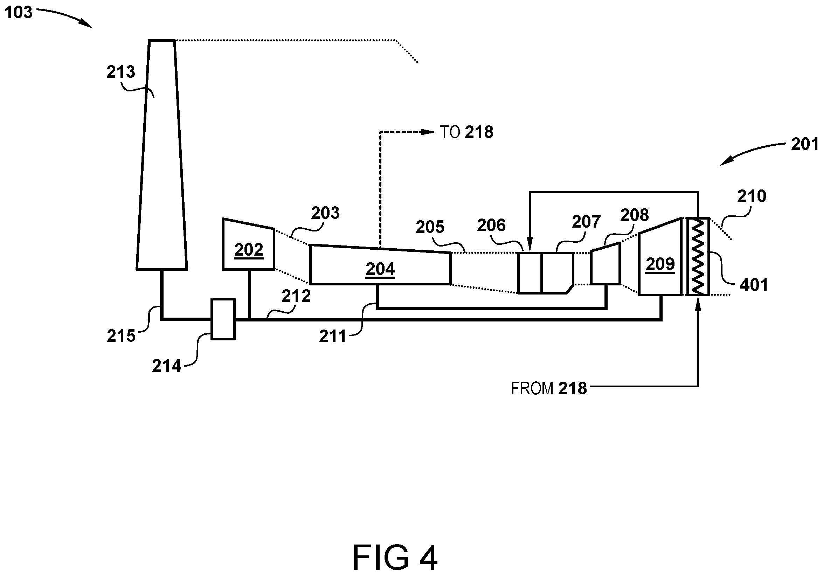

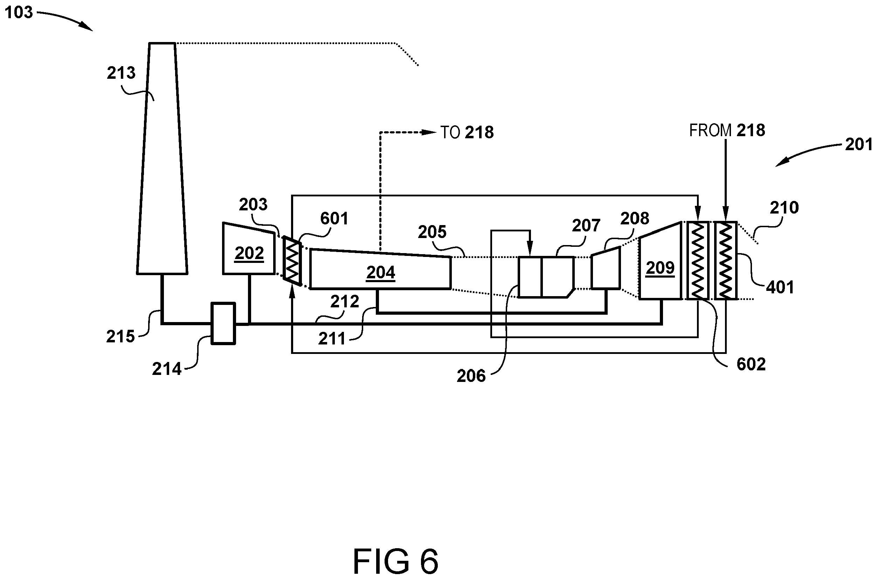

The turbofan engine 103 comprises a core gas turbine 201. In this embodiment, the core gas turbine 201 is a simple cycle gas turbine engine. In other embodiments, as will be described with reference to Figures 4 to 6, complex cycles may be implemented via fuel-cooling of the gas path.

The core gas turbine 201 comprises, in fluid flow series, a low-pressure compressor 202, an interstage duct 203, a high-pressure compressor 204, a diffuser 205, a fuel injection system 206, a combustor 207, a high-pressure turbine 208, a low-pressure turbine 209, and a core nozzle 210. The high-pressure compressor 204 is driven by the high-pressure turbine 208 via a first shaft 211, and the low-pressure compressor 203 is driven by the low-pressure turbine 209 via a second shaft 212. It will be appreciated that in alternative embodiments, the core gas turbine could be of three-shaft configuration.

As described previously, in the present embodiment, the turbofan engines 103 are geared turbofan engines. Thus in operation the low-pressure turbine 209 drives a fan 213 via a reduction gearbox 214. The reduction gearbox receives input drive from the second shaft 212 and provides output drive to the fan 213 via a fan shaft 215. In an embodiment, the reduction gearbox 214 is an epicyclic reduction gearbox. In a specific embodiment, it is a planetary reduction gearbox. Alternatively, it may be a star reduction gearbox, or a compound epicyclic reduction gearbox. As a further alternative, the reduction gearbox 214 could be a layshaft-type reduction gearbox or any other type of reduction gearbox. It will also be appreciated that the principles disclosed herein may be applied to a direct-drive type turbofan engine, i.e. in which there is no reduction gearbox between the low-pressure turbine and the fan.

In operation, hydrogen fuel is pumped from the hydrogen storage tank 104 by a pump 216 and into a main fuel conduit 217 which ultimately delivers fuel to the fuel injection system 206. In the present embodiment, the pump 216 is high-speed centrifugal pump. In a specific embodiment, it is configured to operate at 40000 rpm or more. In a specific embodiment, the centrifugal pump comprises an axial inducer to minimise the required inlet pressure and to accommodate multiphase flow in addition to the centrifugal impeller for developing the majority of the required pressure rise. In an alternative embodiment, a piston-type pump could be used.

In an embodiment, the pump 216 is located inside the hydrogen storage tank 104. In this way leakage of hydrogen fuel past pump seals etc. is accommodated.

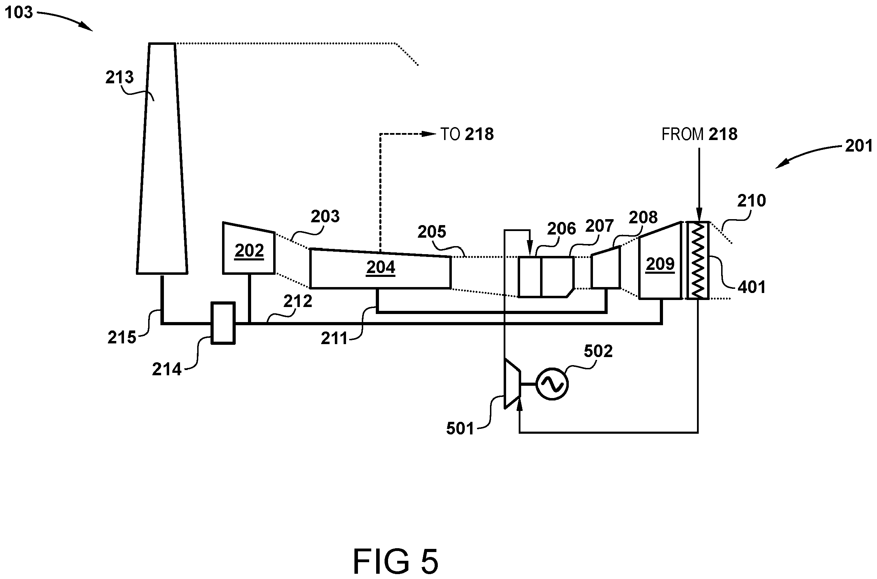

In an embodiment, the pump 216 is driven by a fuel turbine, as will be described with reference to Figure 5. In another embodiment, the pump 216 is driven via an electrical machine. In an embodiment, the drive means for the pump 216 are also located in the hydrogen storage tank 104.

As will be appreciated, it is desirable to increase the temperature of the fuel from the 20 kelvin cryogenic storage condition to a temperature much closer to the firing temperature of the core gas turbine 201; of course this is subject to the constraint of not exceeding the autoignition temperature of the hydrogen fuel prior to admission into the combustor 207. In an example, the injection temperature is from 250 to 300 kelvin, for example 250 kelvin.

In the present embodiment, a vaporiser 218 is therefore provided for heating of the hydrogen fuel to implement a phase change. In the present embodiment, this takes place between the pump 216 and the fuel injection system 206. In an embodiment, the vaporiser 218 is configured to raise the temperature of the hydrogen fuel to the required injection temperature.

In another embodiment, the vaporiser 218 is configured to raise the temperature of the hydrogen fuel to an intermediate temperature less than the injection temperature. This could for example be from 60 to 200 kelvin, for example 150 kelvin. Further heating may subsequently be achieved by implementing a complex cycle configuration, for example fuel recuperation, intercooling, etc. as will be described further with reference to Figures 4 to 6.

In a simple cycle configuration it has been determined that due to the significant heat capacity of the hydrogen fuel, even if it is utilised as a heatsink for engine waste heat, it will still not reach the required injection temperature without implementation of the vaporiser 218. Further, even in a complex cycle configuration in which the heat of combustion products is recuperated into the hydrogen fuel, it has been determined that at certain points in the operational envelope there will be insufficient heat output from the engine to raise the fuel temperature to the injection temperature. Such occasions may include, for example, ground start, in-flight relight, end of cruise idle, etc.

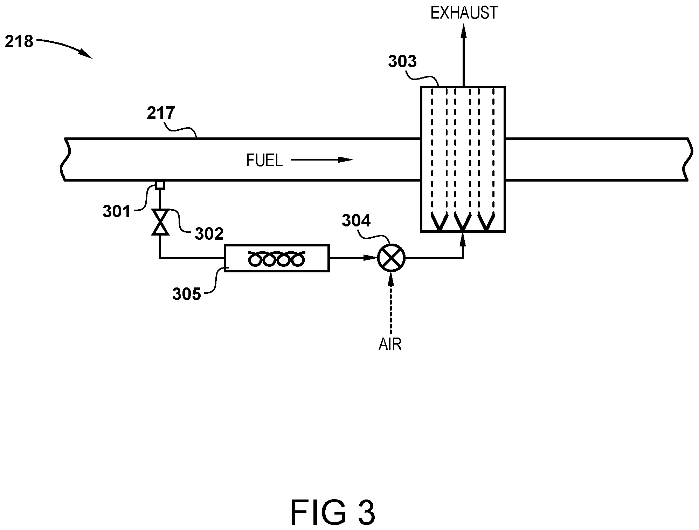

An example configuration of the vaporiser 218 is shown in Figure 3.

The vaporiser 218 comprises an offtake 301 to divert a portion of the hydrogen fuel from the main fuel conduit 217. The amount of hydrogen bled from the main fuel conduit 217 is controlled by a valve 302. In an embodiment, the valve 302 is controlled actively, for example in response to the temperature of the fuel at the fuel injection system 206. Alternatively, the valve 302 may be passively controlled. In operation, of the order of around 1 percent of the hydrogen fuel flow through the main fuel conduit 217 is bled for use in the vaporiser 218.

As described previously, hydrogen has very high specific and latent heat capacities; however as a gas it has a very low molecular weight and density, and thus it can be challenging to exchange heat in a compact way. Thus the vaporiser 218 vaporises the hydrogen fuel in the main fuel conduit 217 by combustion of the bled fuel in a burner 303 located in heat exchange relationship with the main fuel conduit 217.

In the present embodiment, the burner 303 is concentric around the main fuel conduit 217 and hence the burner 303 itself comprises the heat exchanger for transferring heat to hydrogen fuel in the main fuel conduit 217. In this configuration, therefore the heat exchanger function is provided by the main fuel conduit 217 acting as a first pass of the heat exchanger, and the burner 303 around the main fuel conduit 217 acting as the second pass of the heat exchanger, with heat transferring from the second pass to the first pass so as to vaporise the hydrogen fuel therein.

It will of course be appreciated that other arrangements are possible. For example, the burner 303 could be positioned separately from the main fuel conduit 217 and exhaust gases therefrom directed through a dedicated heat exchanger unit. Such a unit may comprise a first pass for the flow of hot exhaust products from the burner 303, and a second pass for the main fuel flow which then vaporises as it flows through the heat exchanger unit. In such an example, the first pass may comprise a plurality of fuel passages for hydrogen fuel received from the main fuel conduit 217. The second pass may comprise a plurality of exhaust passages for exhaust received from the burner 303. During operation, heat is from the second pass to the first pass so as to vaporise the hydrogen fuel therein.

In the present embodiment, air for combustion with the bled hydrogen fuel is bled from the high-pressure compressor 204. Alternatively, it may be bled from the low-pressure compressor 202. It will be appreciated that the air for combustion could be obtained from any other suitable location within the compressor.

In the present example, the air and the bled hydrogen fuel are mixed in a pre-mixer 304 prior to supply to the burner 303, although in alternative embodiments it may be directly co-injected into the burner with the hydrogen fuel instead. Combustion products from the burner 303 are, in an embodiment, exhausted into the bypass duct of the turbofan engine 103. Alternatively, they may be exhausted outside the nacelle.

It should be understood that, in the present example, the products of combustion exhausted from the burner 303 are not mixed with the fuel in the main fuel conduit 217. In this respect, the vaporiser 218 therefore differs from a pre-burner system as used in staged combustion cycle rocket engines.

In steady state, there is enough heat emanating from the burner 303 to ensure vaporisation of the small amount of bled hydrogen fuel. At engine start or other cold conditions for example, the vaporiser 218 comprises a pre-heater 305 to ensure that the bled hydrogen fuel boils prior to mixing with air in the pre-mixer 304. In a specific embodiment, the pre-heater 305 comprises an electric heating element, for example an inductive coil. Alternatively, the pre-heater 305 could be simply configured as a boil volume, in which the ambient conditions therein contain sufficient enthalpy to boil the initial flow of bled hydrogen fuel prior to delivery to the pre-mixer 304 and the burner 303.

As described previously, it is envisaged that the fuel delivery system 201 and fuel injection system 206 may be used in an embodiment of the core gas turbine 201 implementing a simple cycle as described with reference to Figure 2, possibly with fuel cooling of engine or gearbox oil or cooling air. Alternatively, the core gas turbine engine 201 may implement a complex cycle.

A first embodiment of such a complex cycle is shown in Figure 4 with like reference numerals used for matching features. In this example, the turbofan engine 103 and core gas turbine 201 are unchanged from their arrangement in Figure 2, save for the addition of a recuperator 401 located between the low-pressure turbine 209 and core nozzle 210. The recuperator 401 forms part of the overall fuel delivery system and is operable to heat hydrogen fuel by the exhaust stream of the core gas turbine 201. In this way, less fuel may be required to heat the hydrogen fuel to the injection temperature, increasing cycle efficiency.

In an embodiment, the recuperator 401 is a spiral-wound recuperator, which reduces the likelihood of fracture due to thermal expansion and contraction.

Another embodiment of a complex cycle is shown in Figure 5, which builds on the cycle of Figure 4 with the inclusion of a fuel turbine 501. It will be appreciated that substantial energy recovery may be achieved from the exhaust stream if it is accepted that less thrust will be developed by the core nozzle 210. Thus, it is possible to heat the hydrogen fuel beyond the required fuel injection temperature and to recover work in the fuel turbine 501, which may be used to drive a load 502. In this example the load 502 is an electrical generator. Alternatively, the load 502 could be the pump 216.

In a specific embodiment, the electrical generator powers the fuel pump 216. Alternatively, the load could be the second shaft 212, with an appropriate drive mechanism being provided. In this way, the fuel turbine 501 augments the low-pressure turbine 209. It will be appreciated that other engine loads such as oil pumps etc. could also be driven by the fuel turbine 501.

Additionally or alternatively, as shown in Figure 10 it is possible to provide intercooling and/or twin-pass recuperation.

In this embodiment, an intercooler 601 is provided in the interstage duct 203 between the low-pressure compressor 202 and the high-pressure compressor 204 for cooling low-pressure compressor discharge air by the hydrogen fuel. In this way, the amount of compression work required to be performed by the high-pressure compressor 204 is reduced.

In this specific embodiment, a second recuperator 602 is provided between the low-pressure turbine 209 and the recuperator 401 for further recuperative heating of the hydrogen fuel.

Thus, in this example, hydrogen fuel is first heated by the recuperator 401 to a temperature less than the low-pressure compressor 202 discharge air, which heats it further in the intercooler 601. Further heating occurs in the second recuperator 602, which has an inlet temperature higher than the recuperator 401. In this way, the temperature difference between the hydrogen fuel and the core gas turbine exhaust temperature is maximised in each recuperator. It will be appreciated that the fuel turbine 501 may be incorporated in this cycle, for example between the recuperator 701 and the intercooler 601.

Additionally or alternatively, a sequential combustion arrangement may be implemented to any of the aforesaid cycles to facilitate inter-turbine reheat. It will be appreciated that reheat of this type comprises additional stages of combustion to raise temperatures back to a maximum cycle temperature after a first stage of expansion. Along with intercooling, this moves the overall engine cycle closer to an Ericsson cycle, improving thermal efficiency substantially. In a specific example, the high-pressure turbine 208 is a multi-stage turbine and a reheat combustor may be stationed between two of the stages of the high-pressure turbine 208. Alternatively, the reheat combustor could be stationed between the high-pressure turbine 208 and the low-pressure turbine 209.

Various examples have been described, each of which comprise various combinations of features. The scope of the claimed invention is defined in the appended claims.

## Claims

1. A hydrogen-fuelled gas turbine engine (103) comprising:
a fuel pump (216) configured to pump cryogenically-stored hydrogen fuel through a main fuel conduit (217);
a hydrogen fuel vaporiser (218) having a fuel offtake (301) to divert a portion of hydrogen fuel from the main fuel conduit (217), a burner (303) to burn the portion of hydrogen fuel diverted from the main fuel conduit (217), and a heat exchanger to transfer heat produced by the burner to hydrogen fuel in the main fuel conduit, thereby vaporising it; and
a fuel injection system (206) configured to receive vaporised hydrogen fuel and inject it into a combustor (207);
wherein the gas turbine engine comprises a compressor (202, 204) for compressing inlet air for supply to the combustor (207), and **characterised in that** the gas turbine engine further comprises a bleed air system configured to bleed compressed air from the compressor (202, 204) and supply it to the burner (303) to burn with the portion of hydrogen fuel diverted from the main fuel conduit (217).

2. The hydrogen-fuelled gas turbine engine of claim 1, in which the hydrogen fuel vaporiser (218) further comprises a pre-mixer (304) configured to mix air with the portion of hydrogen fuel diverted from the main fuel conduit (217) prior to admission into the burner (303).

3. The hydrogen-fuelled gas turbine engine of claim 1 or claim 2, in which the gas turbine engine further comprises a fuel recuperator (401) between the hydrogen fuel vaporiser (218) and the fuel injection system (206) for heating the hydrogen fuel by exhaust from the gas turbine engine.

4. The hydrogen-fuelled gas turbine engine of claim 3, further comprising a fuel turbine (501) for receiving heated hydrogen fuel from the recuperator (401) to drive a load (502).

5. A method of delivering cryogenically-stored hydrogen fuel to a gas turbine engine (103), comprising:
pumping the hydrogen fuel from a cryogenic storage system (104) through a main fuel conduit (217);
diverting a portion of hydrogen fuel from the main fuel conduit (217);
burning the portion of hydrogen fuel diverted from the main fuel conduit (217) in a burner (303);
vaporising the hydrogen fuel in the main fuel conduit (217) by exchanging heat produced by the burner (303) thereto in a heat exchanger;
**characterised in that** the method further comprises:
bleeding compressed air from a compressor (202, 204) of the gas turbine engine (103) and supplying the compressed air to the burner (303) to burn with the portion of hydrogen fuel diverted from the main fuel conduit (217).

6. The method of claim 5, further comprising pre-heating the portion of hydrogen fuel diverted from the main fuel conduit (217) to boil it prior to the burning step, optionally wherein the pre-heating comprises boiling it with an electrical heating element (305), or in a boil volume.

7. The method of claim 5 or claim 6, further comprising pre-mixing air with the portion of hydrogen fuel diverted from the main fuel conduit (217) prior to the burning step.

8. The method of any one of claims 5 to 7, further comprising recuperating exhaust heat from the gas turbine (103) into the hydrogen fuel after the vaporising step and before the injecting step.

## Patentansprüche

1. Wasserstoffbetriebenes Gasturbinentriebwerk (103), umfassend:
eine Brennstoffpumpe (216), die dazu konfiguriert ist, kryogen gespeicherten Wasserstoffbrennstoff durch eine Hauptbrennstoffleitung (217) zu pumpen;
einen Wasserstoffbrennstoffverdampfer (218) mit einer Brennstoffableitung (301), um einen Teil des Wasserstoffbrennstoffs aus der Hauptbrennstoffleitung (217) abzuleiten, einem Brenner (303), um den aus der Hauptbrennstoffleitung (217) abgeleiteten Teil des Wasserstoffbrennstoffs zu verbrennen, und einem Wärmetauscher, um die von dem Brenner erzeugte Wärme auf Wasserstoffbrennstoff in der Hauptbrennstoffleitung zu übertragen und diesen dadurch zu verdampfen; und
ein Brennstoffeinspritzsystem (206), das dazu konfiguriert ist, verdampften Wasserstoffbrennstoff aufzunehmen und diesen in eine Brennkammer (207) einzuspritzen;
wobei das Gasturbinentriebwerk einen Verdichter (202, 204) zum Verdichten von Einlassluft zur Zufuhr an die Brennkammer (207) umfasst, und
**dadurch gekennzeichnet, dass** das Gasturbinentriebwerk ferner ein Zapfluftsystem umfasst, das dazu konfiguriert ist, verdichtete Luft aus dem Verdichter (202, 204) abzulassen und diese dem Brenner (303) zuzuführen, um sie mit dem Teil des Wasserstoffbrennstoffs zu verbrennen, der aus der Hauptbrennstoffleitung (217) abgeleitet wird.

2. Wasserstoffbetriebenes Gasturbinentriebwerk nach Anspruch 1, bei dem der Wasserstoffbrennstoffverdampfer (218) ferner einen Vormischer (304) umfasst, der dazu konfiguriert ist, Luft mit dem Teil des Wasserstoffbrennstoffs zu mischen, der aus der Hauptbrennstoffleitung (217) abgeleitet wird, bevor er in den Brenner (303) gelangt.

3. Wasserstoffbetriebenes Gasturbinentriebwerk nach Anspruch 1 oder Anspruch 2, bei dem das Gasturbinentriebwerk ferner einen Brennstoffrekuperator (401) zwischen dem Wasserstoffbrennstoffverdampfer (218) und dem Brennstoffeinspritzsystem (206) zum Erwärmen des Wasserstoffbrennstoffs durch Abgase aus dem Gasturbinentriebwerk umfasst.

4. Wasserstoffbetriebenes Gasturbinentriebwerk nach Anspruch 3, ferner umfassend eine Brennstoffturbine (501), um erhitzten Wasserstoffbrennstoff von dem Rekuperator (401) aufzunehmen, um einen Verbraucher (502) anzutreiben.

5. Verfahren zum Liefern von kryogen gespeichertem Wasserstoffbrennstoff an ein Gasturbinentriebwerk (103), umfassend:
Pumpen des Wasserstoffbrennstoffs aus einem kryogenen Speichersystem (104) durch eine Hauptbrennstoffleitung (217);
Ableiten eines Teils des Wasserstoffbrennstoffs aus der Hauptbrennstoffleitung (217);
Verbrennen des von der Hauptbrennstoffleitung (217) abgeleiteten Teils des Wasserstoffbrennstoffs in einem Brenner (303);
Verdampfen des Wasserstoffbrennstoffs in der Hauptbrennstoffleitung (217) durch Austauschen der von dem Brenner (303) erzeugten Wärme zu dieser in einem Wärmetauscher;
**dadurch gekennzeichnet, dass** das Verfahren ferner Folgendes umfasst:
Ablassen von verdichteter Luft aus einem Verdichter (202, 204) des Gasturbinentriebwerks (103) und Zuführen der verdichteten Luft an den Brenner (303), um diese mit dem Teil des Wasserstoffbrennstoffs zu verbrennen, der aus der Hauptbrennstoffleitung (217) abgeleitet wird.

6. Verfahren nach Anspruch 5, ferner umfassend Vorwärmen des aus der Hauptbrennstoffleitung (217) abgeleiteten Teils des Wasserstoffbrennstoffs, um diesen vor dem Verbrennungsschritt zum Sieden zu bringen, wobei das Vorwärmen optional Siedenlassen davon mit einem elektrischen Heizelement (305) oder in einem Siedevolumen umfasst.

7. Verfahren nach Anspruch 5 oder Anspruch 6, ferner umfassend Vormischen von Luft mit dem aus der Hauptbrennstoffleitung (217) abgeleiteten Teil des Wasserstoffbrennstoffs vor dem Verbrennungsschritt.

8. Verfahren nach einem der Ansprüche 5 bis 7, ferner umfassend Rückgewinnen von Abgaswärme aus der Gasturbine (103) in den Wasserstoffbrennstoff nach dem Verdampfungsschritt und vor dem Einspritzschritt.

## Revendications

1. Moteur à turbine à gaz alimenté à l'hydrogène (103) comprenant :
une pompe à combustible (216) configurée pour pomper de l'hydrogène stocké cryogéniquement à travers un conduit de combustible principal (217) ;
un vaporisateur de combustible à hydrogène (218) comportant une dérivation de combustible (301) pour détourner une partie du combustible à hydrogène du conduit de combustible principal (217), un brûleur (303) pour brûler la partie de combustible à hydrogène détournée du conduit de combustible principal (217), et un échangeur de chaleur pour transférer la chaleur produite par le brûleur au combustible à hydrogène dans le conduit de combustible principal, le vaporisant ainsi ; et
un système d'injection de combustible (206) configuré pour recevoir du combustible à hydrogène vaporisé et l'injecter dans une chambre de combustion (207) ;
dans lequel le moteur à turbine à gaz comprend un compresseur (202, 204) pour comprimer l'air d'admission destiné à être fourni à la chambre de combustion (207), et
**caractérisé en ce que** le moteur à turbine à gaz comprend en outre un système de prélèvement d'air configuré pour prélever l'air comprimé en provenance du compresseur (202, 204) et l'amener au brûleur (303) pour brûler avec la partie de combustible à hydrogène détournée du conduit de combustible principal (217).

2. Moteur à turbine à gaz alimenté à l'hydrogène selon la revendication 1, dans lequel le vaporisateur de combustible à hydrogène (218) comprend en outre un pré-mélangeur (304) configuré pour mélanger l'air avec la partie de combustible à hydrogène détournée du conduit de combustible principal (217) avant son admission dans le brûleur (303).

3. Moteur à turbine à gaz alimenté à l'hydrogène selon la revendication 1 ou la revendication 2, dans lequel le moteur à turbine à gaz comprend en outre un récupérateur de combustible (401) entre le vaporisateur de combustible à hydrogène (218) et le système d'injection de combustible (206) pour chauffer le combustible à hydrogène par échappement du moteur à turbine à gaz.

4. Moteur à turbine à gaz alimenté à l'hydrogène selon la revendication 3, comprenant en outre une turbine à combustible (501) pour recevoir du combustible à hydrogène chauffé provenant du récupérateur (401) pour entraîner une charge (502).

5. Procédé de fourniture de combustible à hydrogène stocké cryogéniquement à un moteur à turbine à gaz (103) comprenant :
le pompage du combustible à hydrogène depuis un système de stockage cryogénique (104) à travers un conduit de combustible principal (217) ;
le détournement d'une partie du combustible à hydrogène du conduit de combustible principal (217) ;
la combustion de la partie du combustible à hydrogène détournée du conduit de combustible principal (217) dans un brûleur (303) ;
la vaporisation du combustible à hydrogène dans le conduit de combustible principal (217) en échangeant la chaleur produite par le brûleur (303) dans un échangeur de chaleur ;
**caractérisé en ce que** le procédé comprend en outre :
le prélèvement de l'air comprimé d'un compresseur (202, 204) du moteur à turbine à gaz (103) et la fourniture de l'air comprimé au brûleur (303) pour brûler avec la partie de combustible à hydrogène détournée du conduit de combustible principal (217).

6. Procédé selon la revendication 5, comprenant en outre le préchauffage de la partie de combustible à hydrogène détournée du conduit de combustible principal (217) pour la porter à ébullition avant l'étape de combustion, facultativement dans lequel le préchauffage comprend l'ébullition de celle-ci avec un élément chauffant électrique (305), ou dans un volume d'ébullition.

7. Procédé selon la revendication 5 ou la revendication 6, comprenant en outre le prémélange d'air avec la partie de combustible à hydrogène détournée du conduit de combustible principal (217) avant l'étape de combustion.

8. Procédé selon l'une quelconque des revendications 5 à 7, comprenant en outre la récupération de la chaleur d'échappement de la turbine à gaz (103) dans le combustible à hydrogène après l'étape de vaporisation et avant l'étape d'injection.
